# EUROPEAN PATENT SPECIFICATION

(11) **EP 2 620 555 B1**
(45) Date of publication and mention of the grant of the patent: **01.11.2017**
(21) Application number: 11826536.2
(22) Date of filing: 14.06.2011
(51) Int. Cl.: E02F 9/20, F15B 11/00, F15B 11/02

(54) **ROTATION DRIVE CONTROL DEVICE**
VORRICHTUNG ZUR STEUERUNG EINES DREHANTRIEBS
DISPOSITIF DE COMMANDE D'ENTRAÎNEMENT EN ROTATION

(30) Priority: 21.09.2010 JP 2010210607
(43) Date of publication of application: 31.07.2013
(73) Proprietor: Takeuchi Mfg. Co., Ltd., Nagano 389-0605 (JP)
(72) Inventor: SATOH, Tomonori, Hanishina-gun Nagano 389-0605 (JP); KUMEUCHI, Kengo, Hanishina-gun Nagano 389-0605 (JP); OKUTANI, Shunpei, Hanishina-gun Nagano 389-0605 (JP)
(74) Representative: Patentwerk B.V.
(86) International application number: PCT/JP2011/003354
(87) International publication number: WO 2012/039083

(56) References cited:
- EP-A1- 1 126 086
- EP-A1- 1 961 869
- EP-A1- 2 154 296
- JP-A- 2002 275 945
- JP-A- 2004 360 216
- JP-A- 2005 290 882
- JP-A- 2008 297 754
- US-A1- 2008 317 574

## Description

### TECHNICAL FIELD

The present invention relates to a revolving drive control device of an industrial machine or the like configured having a revolving platform, and more specifically relates to a revolving drive control device which combines an electric motor and a hydraulic motor to perform revolving driving.

### TECHNICAL BACKGROUND

Recently, there has been an increase in the practical application of industrial machines in which a hydraulic pump is driven by an electric motor, and hydraulic fluid supplied from the hydraulic pump is used to actuate a hydraulic actuator. For example, there are power shovels which use such an electric drive device. Examples of hydraulic actuators include hydraulic motors, hydraulic cylinders, and the like, but in a power shovel, various actions such as traveling, revolving, and excavating are performed by actuating these hydraulic actuators, i.e., the hydraulic cylinders actuating the boom, arm, bucket, and the like, and the hydraulic motors for performing actions such as traveling and revolving.

An example of such an industrial machine is the machine disclosed in Patent Document 1. This industrial machine comprises a hydraulic unit having a hydraulic motor as a drive source, and an electric unit having an electric motor as a drive source. During the action of revolving, a controller and an inverter control the driving of the electric motor in the electric unit, and the hydraulic unit is assisted by the drive torque of the electric motor. Specifically, when the electric unit assists the hydraulic unit, an upper revolving body can be revolvably driven by both the hydraulic motor and the electric motor. The electric motor is made to perform a regenerative action during steady revolving and during deceleration, and regenerated power can be stored in a power storage device to eliminate the need for or reduce the size of the power generator, which yields the effects of simplifying the system and reducing costs.

Another example of a revolving drive control device of an industrial machine is given in patent document 2, in which a device is disclosed that contains the features presented in the pre-amble of appended claim 1.

### PRIOR ARTS LIST

### PATENT DOCUMENTS

Patent Document 1: Japanese Laid-open Patent Publication No. 2005-290882(A)
Patent document 2: European patent application EP 2154296-A1

### SUMMARY OF THE INVENTION

### PROBLEMS TO BE SOLVED BY THE INVENTION

In a conventional industrial machine which uses an electric unit and a hydraulic unit such as those described above, ultimately the hydraulic unit is primarily actuated. The hydraulic motor constituting the hydraulic unit has the characteristic of being more likely to be used in work requiring large amounts of force than the electric motor, but needlessly consuming energy during low-load work. In terms of configuration, the hydraulic motor also has the characteristic of having difficulty acquiring regenerated energy. As is clear from these circumstances, a problem is presented in that a hydraulic motor is not as energy-efficient as an electric motor.

The possibility of not using a hydraulic unit and performing driving with only an electric unit has been considered, but a problem with an electric motor is that the motor generates more heat as the work load increases, and measures must be taken to balance heat because of the tendency of the motor to rise in temperature. The electric motor also has the characteristic of being unable to output large torque particularly during times of low rotation, e.g., during an action coming out of a stop. Therefore, in the case of work requiring a large amount of force during low rotation, e.g., in a case requiring large torque following a static state such as a case of revolving a revolving platform following a stopped state, a problem with an electric motor is that it is difficult to perform the action smoothly and quickly.

The present invention was devised in view of such problems, it being an object of the present invention to provide a drive control device configured such that driving is accomplished by a combination of an electric motor and a hydraulic motor, wherein energy can be conserved, and even work requiring large drive force can be performed smoothly and quickly.

### MEANS TO SOLVE THE PROBLEMS

To solve the problems described above, the revolving drive control device according to the present invention has a revolving platform capable of revolving movement and performs a control for revolvably driving the revolving platform by combining a hydraulically driven revolving hydraulic motor and an electrically driven revolving electric motor, the revolving drive control device comprising a hydraulic pump for supplying hydraulic fluid for driving to the revolving hydraulic motor, a hydraulic fluid supply control valve for controlling the supply of hydraulic fluid from the hydraulic pump to the revolving hydraulic motor, a power supply source for supplying power for driving to the revolving electric motor, a power supply control device for controlling the supply of power from the power supply source to the revolving electric motor, a revolving operation device operated in order to control the revolving of the revolving platform, a drive load detection device for detecting the drive load of the revolving hydraulic motor, and a controller for controlling the actions of the hydraulic fluid supply control valve and the power supply control device on the basis of the operation of the revolving operation device and the drive load detected by the drive load detection device. The controller, in correspondence with the operation of the revolving operation device, performs a control whereby hydraulic fluid is supplied from the hydraulic pump to the revolving hydraulic motor by the hydraulic fluid supply control valve so that the revolving platform is revolvably driven by the revolving hydraulic motor, and power for driving is supplied to the revolving electric motor by the power supply control device so that the revolving platform is revolvably driven by the revolving electric motor; and the controller performs a control whereby when the drive load of the revolving hydraulic motor detected by the drive load detection device is a predetermined high load, the revolving platform is revolvably driven by the revolving hydraulic motor and the revolving electric motor, and when the drive load of the revolving hydraulic motor is a predetermined low load, driving by the revolving hydraulic motor is stopped and the revolving platform is revolvably driven by the revolving electric motor.

In the revolving drive control device of the configuration described above, it is preferable that when the drive load of the revolving hydraulic motor is a predetermined low load and driving by the revolving hydraulic motor is stopped, a control is performed for implementing a state in which the revolving hydraulic motor rotates freely.

In the revolving drive control device of the configuration described above, it is preferable that the hydraulic pump is driven by the electric motor, and when the drive load of the revolving hydraulic motor is the predetermined low load and driving by the revolving hydraulic motor is stopped, a control is performed for stopping the driving of the electric motor and stopping the driving of the hydraulic pump.

In the revolving drive control device of the configuration described above, it is preferable that the drive load detection device is configured so as to detect the hydraulic fluid pressure supplied to the revolving hydraulic motor from the hydraulic pump to detect the drive load of the revolving hydraulic motor.

The revolving drive control device of the configuration described above preferably comprises a revolving speed detection device for detecting the revolving speed of the revolving platform, and the controller preferably performs a control for revolvably driving the revolving platform using the revolving hydraulic motor and the revolving electric motor so that the revolving speed of the revolving platform detected by the revolving speed detection device reaches a revolving speed corresponding to the operation of the revolving operation means.

In the revolving drive control device of the configuration described above, it is preferable that when the driving by the revolving hydraulic motor is stopped, the revolving platform is revolvably driven by the revolving electric motor, and the revolving speed of the revolving platform detected by the revolving speed detection device is lower than the revolving speed corresponding to the operation of the revolving operation means, the revolving platform is revolvably driven by the revolving hydraulic motor in addition to the revolving electric motor.

The revolving drive control device of the configuration described above preferably comprises a revolving speed detection device for detecting the revolving speed of the revolving platform, and a relief valve for varying and setting the relief pressure of the hydraulic fluid supplied from the hydraulic fluid supply control valve to the revolving hydraulic motor; and the controller, when the revolving platform is being rotatably driven by the revolving hydraulic motor, preferably performs a control for increasing the relief pressure of the relief valve in accordance with the revolving speed of the revolving platform detected by the revolving speed detection device being lower than the revolving speed corresponding to the operation of the revolving operation means.

In the revolving drive control device of the configuration described above, it is preferable that a regulatory hydraulic pressure supply valve is provided for supplying the relief valve with relief control hydraulic pressure for regulating the relief pressure of the relief valve, and the controller varies and sets the relief pressure by controlling the relief control hydraulic pressure from the regulatory hydraulic pressure supply valve.

### ADVANTAGEOUS EFFECTS OF THE INVENTION

In the revolving drive control device of an industrial machine according to the present invention, the controller performs a control for causing the revolving platform to be revolvably driven by the revolving hydraulic motor and the revolving electric motor in accordance with the operation of the revolving operation means, and the revolving platform is revolvably driven by the revolving hydraulic motor and the revolving electric motor when the drive load of the revolving hydraulic motor is a predetermined high load; therefore, work can be performed smoothly even during a high load state, i.e. when a large amount of power is required. Because control is performed for stopping the driving by the revolving hydraulic motor and revolvably driving the revolving platform by the revolving electric motor when the drive load of the revolving hydraulic motor is a predetermined low load, the electric motor, which is more energy-efficient than the hydraulic motor, can be used alone to conserve energy.

### BRIEF DESCRIPTION OF THE DRAWINGS

FIG. 1 is a perspective view of a power shovel representing an example in which the drive control device of an industrial machine according to the present invention is applied;
FIG. 2 is a view showing a hydraulic circuit and an electric circuit representing the drive control device;
FIG. 3 is a graph showing the relationship between time immediately after startup and torque in the drive control device;
FIG. 4 is a view showing the circuit configuration of FIG. 2, further comprising a resolver and a relief valve; and
FIG. 5 is a view showing the circuit configuration of FIG. 2, further comprising a resolver, a relief valve, and a proportional valve.

### DESCRIPTION OF THE EMBODIMENTS

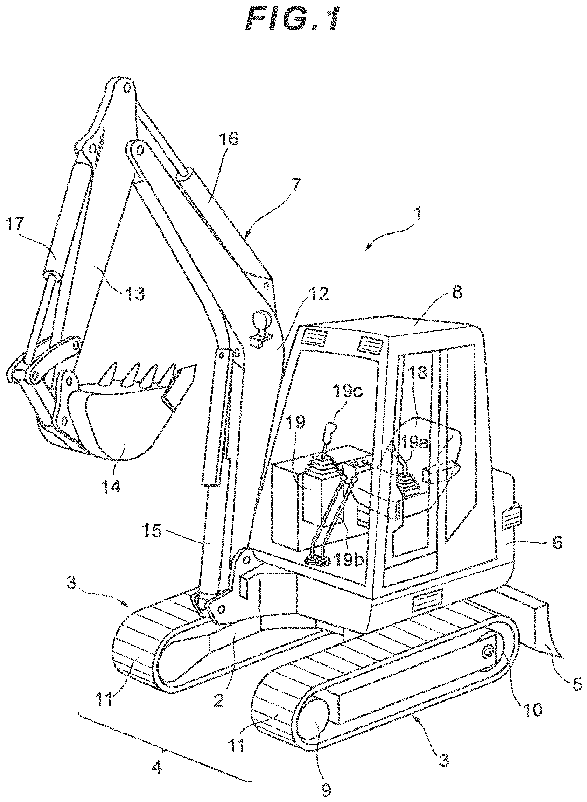

An embodiment of the present invention is described below with reference being made to the accompanying drawings. FIG. 1 shows a crawler-type power shovel 1 as an example of an industrial machine to which the drive control device of an industrial machine according to the present invention is applied. This power shovel 1 is configured from a travel device 4 configured with travel mechanisms 3, 3 provided to the left and right of a travel carriage 2 (a vehicle body) that is substantially "H"-shaped in planar view, a blade 5 provided in a vertically swingable manner to the rear part of the travel carriage 2, a revolving platform 6 revolvably provided to the top part of the travel carriage 2, a shovel mechanism 7 provided to the front part of the revolving platform 6, and an operator cabin 8 (a vehicle body) for a driver to occupy, the operator cabin being erected on the top part of the revolving platform 6.

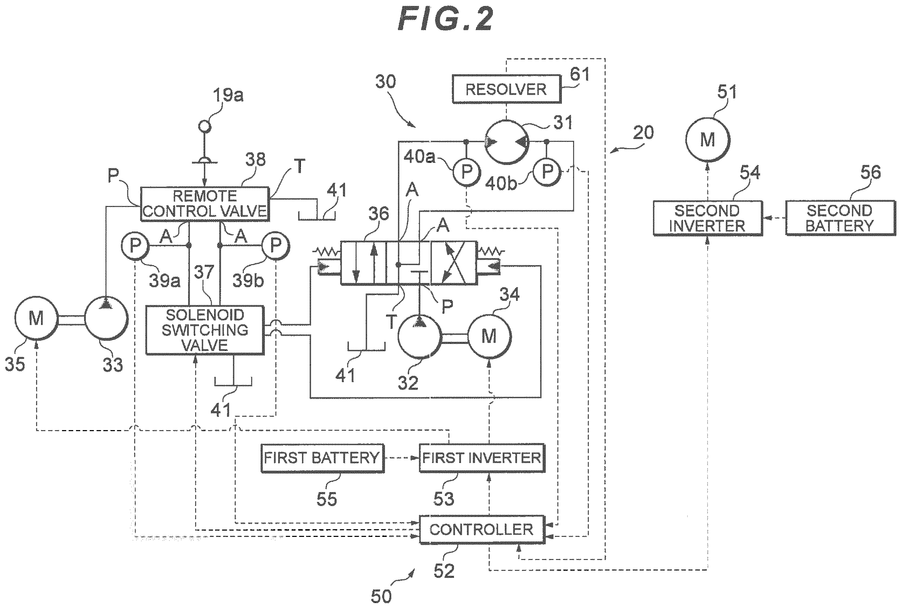

The pair of left and right travel mechanisms 3, 3 constituting the travel device 4 are configured using crawler belts 11 wrapped around drive sprocket wheels 9 provided to the left and right front parts of the travel carriage 2 and idler wheels 10 provided to the left and right rear parts of the travel carriage 2. The drive sprocket wheels 9 are rotatably driven by a traveling hydraulic motor (not shown) actuated by hydraulic pressure. The blade 5 is swung by the actuation of a hydraulically driven blade cylinder (not shown). The revolving platform 6 is revolvably driven by a revolving hydraulic motor 31 and a revolving electric motor 51 shown in FIG. 2 (described in detail hereinafter).

The shovel mechanism 7 is configured from: a boom 12 pivotably connected to the front part of the revolving platform 6 so as to be capable of rising and falling movement; an arm 13 pivotably connected to the distal end of the boom 12 so as to be capable of swinging up and down in the plane where the boom 12 rises and falls; a bucket 14 pivotably connected to the distal end of the arm 13 so as to be capable of swinging up and down; and a boom cylinder 15, arm cylinder 16, and bucket cylinder 17 which are hydraulically driven. The boom 12 is raised and lowered according to the extending or retracting action of the boom cylinder 15, the arm 13 is swung up and down according to the extending or retracting action of the arm cylinder 16, and the bucket 14 is swung according to the extending or retracting action of the bucket cylinder 17. In the following description, these cylinders 15 to 17 and the blade cylinder of the blade 5 are collectively referred to as the "group of hydraulic cylinders." The operator cabin 8 is formed in the shape of a rectangular box enclosed on all sides, the interior of which being provided with an operator seat 18 for the driver to sit, and an operating device 19 for performing the actuated operation of the travel device 4 and the shovel mechanism 7.

The operating device 19 is provided with operating levers 19a to 19c for performing operations of the power shovel 1 such as travel and excavation. By sitting in the operator seat 18 and operating the operating levers 19a to 19c, the driver can control the driving of the group of hydraulic cylinders and the traveling hydraulic motor to cause the power shovel 1 to travel, control the driving of the revolving hydraulic motor 31 and the revolving electric motor 51 to cause the revolving platform 6 to revolve, and control the actuation of the shovel mechanism 7 to perform excavation and other work.

The group of hydraulic cylinders, the traveling hydraulic motor, and the revolving hydraulic motor 31 (see FIG. 2) are actuated by the supply of hydraulic fluid (hydraulic pressure). Specifically, a hydraulic unit 30 described hereinafter controls the amount and direction of hydraulic fluid supplied to the group of hydraulic cylinders, the traveling hydraulic motor, and the revolving hydraulic motor 31 according to the operation of the operating levers 19a to 19c of the operating device 19 by the worker, whereby the power shovel 1 can be made to travel, the shovel mechanism 7 can be actuated, the revolving platform 6 can be made to revolve, and work such as travel, excavation, and revolving can be performed. The operating device 19 comprises a travel operating lever 19b for operating the travel of the power shovel 1, a work operating lever 19c for operating components such as the boom, the arm, and the bucket, and a revolution operating lever 19a for operating the revolving of the revolving platform 6.

In the power shovel 1 configured in this manner, the drive control device according to the present invention is used to control the revolving action of the revolving platform 6, and the device and method for controlling the revolving action of the revolving platform 6 are described below. The revolving action of the revolving platform 6 is performed by a revolving control mechanism 20 (see FIG. 2) configured including the hydraulic unit 30 and the electric unit 50. This revolving drive control has three drive patterns, which are driving by only the electric unit 50 (the revolving electric motor 51) (referred to below as electric-only driving), driving by only the hydraulic unit 30 (the revolving hydraulic motor 31) (referred to below as hydraulic-only driving), and driving by both the electric unit 50 (the revolving electric motor 51) and the hydraulic unit 30 (the revolving hydraulic motor 31) (referred to below as electric and hydraulic driving).

The hydraulic unit 30 comprises, in addition to the revolving hydraulic motor 31, a main hydraulic pump 32, a pilot hydraulic pump 33, a first electric motor 34, a second electric motor 35, a main control valve 36, a solenoid switching valve 37, a remote control valve 38, pilot pressure detection sensors 39a, 39b, hydraulic fluid pressure detection sensors 40a, 40b, and hydraulic fluid tanks 41, as shown in FIG. 2. In FIG. 2, the hydraulic circuit is shown by solid lines, and the electric or optic signal circuit is shown by dashed lines.

In the hydraulic unit 30, the main hydraulic pump 32, which is driven by the first electric motor 34, discharges hydraulic fluid to be supplied to the revolving hydraulic motor 31. The pilot hydraulic pump 33, which is driven by the second electric motor 35, discharges hydraulic fluid for supplying pilot pressure to a pilot oil channel. The first electric motor 34 and the second electric motor 35 are driven by receiving AC current via a first inverter 53. The main control valve 36 receives pilot pressure and controls the supply of hydraulic fluid to the revolving hydraulic motor 31 as is described hereinafter. This pilot pressure is created in the remote control valve 38 and outputted to the main control valve 36 via the solenoid switching valve 37. The main control valve 36 actuates upon receiving this pilot pressure and controls the supply of hydraulic fluid to the revolving hydraulic motor 31.

The main control valve 36 has a P port (a pump port), a T port (a tank port), and two A ports (output ports), the main hydraulic pump 32 being connected to the P port, a hydraulic fluid tank 41 being connected to the T port, and the ports on both sides of the revolving hydraulic motor 31 being connected to the two A ports as shown in FIG. 2. When the main control valve 36 is in a neutral state, the P port is blocked, blocking the supply of hydraulic pressure from the main hydraulic pump 32, the T port and the two A ports are communicated, the ports on both sides of the revolving hydraulic motor 31 are connected to the tank, and the revolving hydraulic motor 31 rotates freely, as shown in FIG. 2.

When pilot hydraulic pressure is received on the right side and the main control valve 36 moves to the left in FIG. 2, the P port connects with the left A port while the T port connects with the right A port, discharged oil from the main hydraulic pump 32 is supplied from the right port of the revolving hydraulic motor 31, the revolving hydraulic motor 31 is rotatably driven, and the revolving platform 6 is revolvably actuated. Conversely, when pilot hydraulic pressure is received on the left side and the main control valve 36 moves to the right in FIG. 2, the P port connects with the right A port while the T port connects with the left A port, discharged oil from the main hydraulic pump 32 is supplied from the left port of the revolving hydraulic motor 31, the revolving hydraulic motor 31 is rotatably driven opposite of the previous direction, and the revolving platform 6 is revolvably actuated opposite of the previous direction.

The remote control valve 38 has a P port (pump port) a T port (a tank port), and two A ports (output ports), the pilot hydraulic pump 33 being connected to the P port, a hydraulic fluid tank 41 being connected to the T port, and the solenoid switching valve 37 being connected to both A ports as shown in FIG. 2. The remote control valve 38 is configured so as to be actuated according to the operation of the revolution operating lever 19a, and the P port is blocked when the revolution operating lever 19a is not being operated. When the revolution operating lever 19a is operated, pilot pressure is generated by the remote control valve 38 using hydraulic fluid from the pilot hydraulic pump 33, according to the operation of the lever. This pilot pressure (remote control pressure) is outputted to the main control valve 36 via the solenoid switching valve 37. The pilot pressure generated at this time is regulated by the remote control valve 38 so as to reach a pressure corresponding to the operated amount of the revolution operating lever 19a. Specifically, a smaller operated amount of the revolution operating lever 19a corresponds to a lower pilot pressure, and the pilot pressure increases as the operated amount increases.

The solenoid switching valve 37 actuates upon receipt of a control signal from a controller 52 described in detail hereinafter, and the solenoid switching valve 37 performs a control for transferring the pilot pressure generated by the main control valve 36 back to the main control valve 36 or blocking the pilot pressure.

The pilot pressure outputted from the remote control valve 38 in this manner is detected by the pilot pressure detection sensors 39a, 39b provided between the remote control valve 38 and the solenoid switching valve 37, and the detected pilot pressure is sent to the controller 52. The main control valve 36 actuates upon receipt of the pilot pressure, but at this time, the operated amount is controlled according to the strength of the pilot pressure, and as the pilot pressure increases, more oil is supplied to the revolving hydraulic motor 31 from the main hydraulic pump 32 and the revolving speed increases.

The hydraulic fluid pressure detection sensors 40a, 40b, which are provided to the oil channels between the main control valve 36 and the revolving hydraulic motor 31, detect the hydraulic fluid pressure of the revolving hydraulic motor 31 in these oil channels. The hydraulic fluid pressure detected by the hydraulic fluid pressure detection sensors 40a, 40b is also sent to the controller 52.

The electric unit 50 comprises the above-described revolving electric motor 51, the controller 52, first and second inverters 53, 54, first and second batteries 55, 56, and a resolver 61 for detecting the rotation of the revolving hydraulic motor 31. The first inverter 53 performs a control for converting DC power from the first battery 55 to AC power and supplying this AC power to the first electric motor 34. The second inverter 54 performs a control for converting DC power from the second battery 56 to AC power and supplying this AC power to the revolving electric motor 51. After the end of a day of work, for example, the first battery 55 and the second battery 56 can be charged by receiving power from an external applied power source (not shown) via a charger (not shown). Lithium ion cells, organic radical cells, and other secondary cells, for example, can be used as the first battery 55 and the second battery 56. Another option is to use one battery for both purposes, rather than providing two separate batteries such as the first battery 55 and the second battery 56.

The controller 52, which performs a control in a unified manner, receives pilot pressure signals detected by the pilot pressure detection sensors 39a, 39b, hydraulic fluid pressure signals detected by the hydraulic fluid pressure detection sensors 40a, 40b, and a rotational speed signal (i.e., a signal indicating the rotational speed of the revolving platform 6) of the revolving hydraulic motor 31 detected by the resolver 61. The actions of the first and second inverters 53, 54 and of the solenoid switching valve 37 are controlled on the basis of these pilot pressure signals, hydraulic fluid pressure signals, and rotational speed signals, and the revolving of the revolving platform 6 is controlled. Revolving control by the controller 52 is described below.

The basis of this revolving control is that revolving control by the revolving electric motor 51 is given priority, and assistance by the revolving hydraulic motor 31 is received as needed, from the standpoint of energy conservation. Moreover, when a large drive torque is needed, such as when revolving starts or when revolving is at a low speed, the revolving electric motor 51 and the revolving hydraulic motor 31 are driven, and control is performed such that as the revolving drive torque decreases, assistance from the revolving hydraulic motor 31 is lessened, increasing the drive ratio of the revolving electric motor 51, and ultimately the driving of the revolving hydraulic motor 31 is ceased and the revolving action is performed by the revolving electric motor 51.

When the revolving action is being performed by the revolving electric motor 51 in this manner, and when the actual revolving speed is small in relation to a revolving action speed request (pilot pressure or remote control pressure) on the basis of the operation of the revolution operating lever 19a (when the revolving resistance increases and the revolving speed decreases in a case such as the work of pushing the bucket being performed while revolving, for example), control is performed for actuating the revolving hydraulic motor 31 as well as generating a large revolving drive force to cause revolving. The preferred control, performed when the revolving speed is less than the requested value (expected rotational speed) pertaining to the operation of the revolution operating lever 19a, is control for raising the relief pressure in the driving of the revolving hydraulic motor 31 according to the difference thereof. A specific example of this manner of control is described below.

When the revolution operating lever 19a is operated, pilot pressure is generated by the remote control valve 38 in accordance with the operation, the pilot pressure is detected by the pilot pressure detection sensors 39a, 39b, and the detection signal is sent to the controller 52. Upon detecting the pilot pressure, the controller 52 outputs a control signal to the second inverter 54, control of the supply of power to the revolving electric motor 51 is performed by the second inverter 54, and the revolving electric motor 51 is driven. When the revolution operating lever 19a is operated from the neutral state and revolving of the revolving platform 6 is initiated, the controller 52 outputs a control signal to the first inverter 53, control of the supply of power to the first electric motor 34 is performed by the first inverter 53, and the main hydraulic pump 32 is driven. The pilot pressure is outputted to the main control valve 36 via the solenoid switching valve 37, the main control valve 36 is actuated according to the pilot pressure, and the oil discharged from the main hydraulic pump 32 is supplied to the revolving hydraulic motor 31. Thus, when revolving of the revolving platform 6 is initiated, revolvable driving by the revolving electric motor 51 and revolvable driving by the revolving hydraulic motor 31 are performed simultaneously. Specifically, when a large revolving drive torque is needed at the start of revolving, electric and hydraulic driving are combined to perform a smooth revolving action.

The controller 52 receives a hydraulic fluid pressure signal of the revolving hydraulic motor 31 detected by the hydraulic fluid pressure detection sensors 40a, 40b, and a rotational speed signal of the revolving hydraulic motor 31 (a revolving speed signal of the revolving platform 6) detected by the resolver 61. The controller 52 controls the revolvable driving by the revolving electric motor 51 and the revolvable driving by the revolving hydraulic motor 31 so that the revolving platform 6 revolves at a revolving speed corresponding to the operated amount of the revolution operating lever 19a (i.e. the pilot pressure). Because the necessary drive torque decreases when revolving proceeds even though a large drive torque is needed at the start of revolving, the drive torque of the revolving hydraulic motor 31 (the drive load) decreases and the hydraulic fluid pressure detected by the hydraulic fluid pressure detection sensors 40a, 40b decreases when revolvable driving is maintained by the revolving electric motor 51. During a state in which this hydraulic fluid pressure is low and revolving can be performed by driving by the revolving electric motor 51 alone, the controller 52 outputs a control signal to the solenoid switching valve 37, the supply of the pilot pressure to the main control valve 36 is blocked, and the main control valve 36 is put into neutral (the state shown in FIG. 2). At this time, the supply of power to the first electric motor 34 is also stopped, and energy can be conserved. As a result, the supply of hydraulic pressure to the revolving hydraulic motor 31 is blocked and the input and output ports are connected to the tank 41, resulting in a state in which the revolving hydraulic motor 31 rotates freely and there is no rotation resistance. As a result, energy can be conserved with the revolving platform 6 being revolved only by the revolving electric motor 51 in this state. In this example, the drive load of the revolving hydraulic motor 31 is detected by the hydraulic fluid pressure detection sensors 40a, 40b, but the drive torque may also be detected directly.

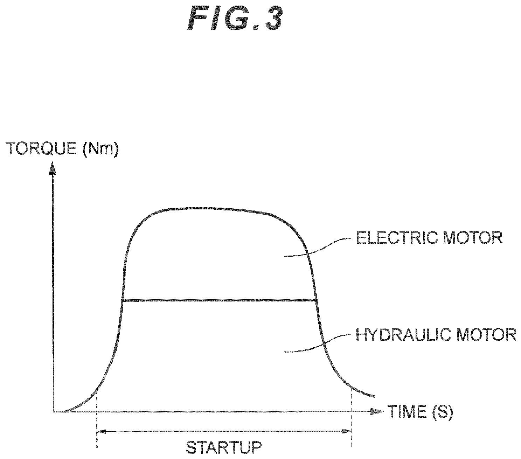

As described above, the revolving control mechanism 20 of the power shovel 1 is capable of revolving the revolving platform 6 by electricity alone during a low load, and by electricity and hydraulic pressure together during a high load. Examples of times of a high load include immediately after the power shovel 1 is started up as shown by the drive torque change in FIG. 3, for example, and times when there is no revolving but a large force is required, such as excavating work performed while the bucket 14 is pushed laterally. At such times, the revolving action by the revolving hydraulic motor 31 is performed as well, whereby the revolving action can be performed smoothly and the operational feeling can be improved. At times of high load such as these, revolving the revolving platform 6 can be achieved by driving by the revolving hydraulic motor 31 alone without supplying power to the revolving electric motor 51.

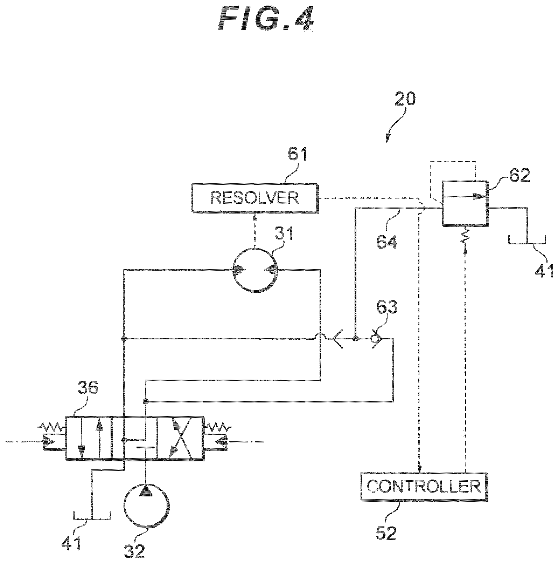

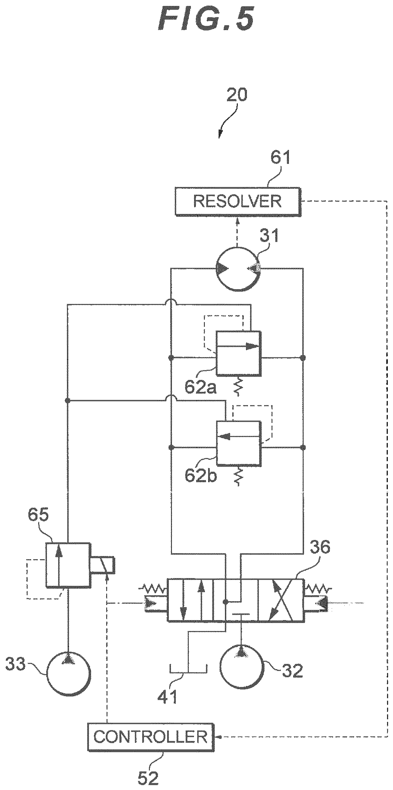

A resolver 61 capable of detecting the rotational frequency (rotational angle) of the revolving hydraulic motor 31 in the circuit, and a relief valve 62 for relieving the hydraulic fluid tank 41 of hydraulic fluid in the oil channel between the main control valve 36 and the revolving hydraulic motor 31, may be provided as shown in FIGS. 4 and 5 to make it possible to vary and regulate the torque of hydraulic pressure driving.

In the case of the circuit configuration shown in FIG. 4, for example, the relief valve 62 is provided to a branching oil channel 64 which branches from the oil channel between the main control valve 36 and the revolving hydraulic motor 31, and the controller 52 detects the rotational speed of the revolving hydraulic motor 31 (i.e. the rotational speed of the revolving platform 6) detected by the resolver 61. The controller 52 detects the pilot pressure detected by the pilot pressure detection sensors 39a, 39b as shown in FIG. 2, and calculates an estimated rotational speed of the revolving hydraulic motor 31 (i.e. the rotational speed of the revolving platform 6) estimated from the detected pilot pressure. When the detected rotational speed of the revolving hydraulic motor 31 is lower than the estimated rotational speed, the controller 52 outputs a control signal to the relief valve 62 to raise the relief pressure and raise the hydraulic fluid pressure of the revolving hydraulic motor 31. A check valve 63 is provided to the branching oil channel 64, and hydraulic fluid is allowed to flow into the branching oil channel 64 from the oil channel between the main control valve 36 and the revolving hydraulic motor 31 but is prevented from flowing in from the opposite direction.

In the circuit configuration shown in FIG. 5, two relief valves 62a, 62b are provided, the relief valves 62a, 62b are driven at the pilot pressure, and a proportional valve 65 is provided in the oil channel between the pilot hydraulic pump 33 and the relief valves 62a, 62b. The proportional valve 65, which is an electromagnetic proportional valve, is configured so as to receive control signals from the controller 52 and open and close on the basis of these control signals. The controller 52 controls the amount by which the proportional valve 65 is open on the basis of the rotational speed of the revolving hydraulic motor 31 detected by the resolver 61. Thus, the relief pressure of the relief valves 62a, 62b can be controlled by controlling the amount by which the proportional valve 65 is open, and the hydraulic fluid pressure of the revolving hydraulic motor 31 can be raised in the same manner as in the circuit configuration shown in FIG. 4.

The power shovel 1 in the present embodiment comprises the revolving control mechanism 20 configured as described above, and the power shovel is configured so that the revolving of the revolving platform 6 can be switched by the revolving control mechanism 20, depending on the state of the load, among three drive patterns: electric-only driving, hydraulic-only driving, and electric and hydraulic driving. Therefore, the resulting effect is that during a low load, energy can be conserved by driving only the energy-efficient revolving electric motor 51, and during a high load, work can be performed smoothly by driving the revolving hydraulic motor 31. During hydraulic driving, the torque can be varied and regulated.

The present invention should not be interpreted as being limited to the embodiment described above; improvements can be made as appropriate within a range that does not deviate from the scope of the present invention. For example, the revolving hydraulic motor 31 is not limited to a motor; the revolving platform 6 may be made to revolve by another hydraulic actuator. Similarly, the drive device for driving the main hydraulic pump 32 is not limited to the first electric motor 34 described above; the present invention can be applied even when an engine is used for driving.

Furthermore, in the embodiment described above, an example was described in which a crawler-type power shovel 1 was used, but the present invention is not limited to this example; examples of other applications include shovel loaders, hydraulic cranes, and other work machines.

### EXPLANATION OF NUMERALS AND CHARACTERS

1: power shovel (work machine)
2: travel carriage (base)
6: revolving platform
19a: revolution operating lever (revolving operation means)
31: revolving hydraulic motor
32: hydraulic pump
34: first electric motor (hydraulic pump drive means)
36: control valve (hydraulic fluid supply control valve)
40a, 40b: hydraulic fluid pressure detection sensors (hydraulic fluid pressure detection means)
51: revolving electric motor
52: controller (revolving control means)
53: first inverter (hydraulic pump drive means)
54: second inverter (electric motor drive means)
55: first battery (hydraulic pump drive means)
56: second battery (electric motor drive means)
61: resolver (rotational speed detection means)
62: relief valve
65: proportional valve (regulatory hydraulic pressure supply valve)

## Claims

1. A revolving drive control device which has a revolving platform (6) capable of revolving movement and which performs a control for revolvably driving the revolving platform by combining a hydraulically driven revolving hydraulic motor (31) and an electrically driven revolving electric motor (51), the revolving drive control device comprising:
a hydraulic pump (32) for supplying hydraulic fluid for driving to the revolving hydraulic motor (31);
a hydraulic fluid supply control valve (36) for controlling the supply of hydraulic fluid from the hydraulic pump (32) to the revolving hydraulic motor (31);
a power supply source (56) for supplying power for driving to the revolving electric motor (51);
a power supply control device (52) for controlling the supply of power from the power supply source (56) to the revolving electric motor (51);
a revolving operation device (19a) operated in order to control the revolving of the revolving platform (6);
**characterized in that** a drive load detection device (40a,b) for detecting the drive load of the revolving hydraulic motor (31); and
a controller (52) for controlling the actions of the hydraulic fluid supply control valve (36) and the power supply control device on the basis of the operation of the revolving operation device (19a) and the drive load detected by the drive load detection device (40a,b);
the controller (52), in correspondence with the operation of the revolving operation device, performing a control whereby hydraulic fluid is supplied from the hydraulic pump (32) to the revolving hydraulic motor (31) by the hydraulic fluid supply control valve (36) so that the revolving platform (6) is revolvably driven by the revolving hydraulic motor (31), and power for driving is supplied to the revolving electric motor (51) by the power supply control device (52) so that the revolving platform is revolvably driven by the revolving electric motor (51); and
the controller (52) performing a control whereby when the drive load of the revolving hydraulic motor (31) detected by the drive load detection device (40a,b) is a predetermined high load, the revolving platform (6) is revolvably driven by the revolving hydraulic motor (31) and the revolving electric motor (51), and when the drive load of the revolving hydraulic motor (31) is a predetermined low load, driving by the revolving hydraulic motor is stopped and the revolving platform (6) is revolvably driven by the revolving electric motor (51).

2. The revolving drive control device according to claim 1, **characterized in that** when the drive load of the revolving hydraulic motor (31) is a predetermined low load and driving by the revolving hydraulic motor is stopped, a control is performed for implementing a state in which the revolving hydraulic motor rotates freely.

3. The revolving drive control device according to claim 1 or 2, **characterized in that** the hydraulic pump (32) is driven by an electric motor (34), and when the drive load of the revolving hydraulic motor (31) is the predetermined low load and driving by the revolving hydraulic motor is stopped, a control is performed for stopping the driving of the electric motor (34) and stopping the driving of the hydraulic pump (32).

4. The revolving drive control device according to any of claims 1 through 3, **characterized in that** the drive load detection device (40a,b) is configured so as to detect the hydraulic fluid pressure supplied to the revolving hydraulic motor (31) from the hydraulic pump (32) to detect the drive load of the revolving hydraulic motor (31).

5. The revolving drive control device according to any of claims 1 through 4, comprising a revolving speed detection device (60) for detecting the revolving speed of the revolving platform (6), the controller (52) performing a control for revolvably driving the revolving platform using the revolving hydraulic motor (31) and the revolving electric motor (51) so that the revolving speed of the revolving platform detected by the revolving speed detection device reaches a revolving speed corresponding to the operation of the revolving operation means.

6. The revolving drive control device according to claim 5, **characterized in that** when the driving by the revolving hydraulic motor (31) is stopped, the revolving platform (6) is revolvably driven by the revolving electric motor (51), and the revolving speed of the revolving platform detected by the revolving speed detection device (61) is lower than the revolving speed corresponding to the operation of the revolving operation means, the revolving platform is revolvably driven by the revolving hydraulic motor (31) in addition to the revolving electric motor (51).

7. The revolving drive control device according to any of claims 1 through 6, comprising:
a revolving speed detection device (61) for detecting the revolving speed of the revolving platform (6); and
a relief valve (62) for varying and setting the relief pressure of the hydraulic fluid supplied from the hydraulic fluid supply control valve (36) to the revolving hydraulic motor (31);
the controller (52), when the revolving platform (6) is being rotatably driven by the revolving hydraulic motor (31), performing a control for increasing the relief pressure of the relief valve (62) in accordance with the revolving speed of the revolving platform (6) detected by the revolving speed detection (61) device being lower than the revolving speed corresponding to the operation of the revolving operation means.

8. The revolving drive control device according to claim 7, **characterized in that**:
a regulatory hydraulic pressure supply valve (65) is provided for supplying the relief valve (62) with relief control hydraulic pressure for regulating the relief pressure of the relief valve; and
the controller (52) varies and sets the relief pressure by controlling the relief control hydraulic pressure from the regulatory hydraulic pressure supply valve (65).

## Patentansprüche

1. Drehantriebssteuervorrichtung, die eine drehende Plattform (6) hat, die zu einer Drehbewegung fähig ist, und die eine Steuerung zum drehbaren Antreiben der drehenden Plattform durch Kombinieren eines hydraulisch angetriebenen umlaufenden Hydraulikmotors (31) und eines elektrisch angetriebenen umlaufenden Elektromotors (51) ausführt, wobei die Drehantriebssteuervorrichtung Folgendes umfasst:
eine Hydraulikpumpe (32), um Hydraulikfluid zum Antreiben des umlaufenden Hydraulikmotors (31) zu liefern;
ein Hydraulikfluid-Liefersteuerventil (36) zum Steuern des Lieferns von Hydraulikfluid von der Hydraulikpumpe (32) zu dem umlaufenden Hydraulikmotor (31);
eine Stromversorgungsquelle (56) zum Liefern von Strom zum Antreiben des umlaufenden Elektromotors (51);
eine Stromliefersteuervorrichtung (52) zum Steuern der Stromlieferung von der Stromlieferquelle (56) zu dem umlaufenden Elektromotor (51);
eine drehende Betriebsvorrichtung (19a), die betrieben wird, um das Drehen der drehenden Plattform (6) zu steuern;
**dadurch gekennzeichnet, dass** eine Antriebslast-Erfassungsvorrichtung (40a, b) zum Erfassen der Antriebslast des umlaufenden Hydraulikmotors (31); und
eine Steuervorrichtung (52) zum Steuern der Aktionen des Hydraulikfluid-Liefersteuerventils (36) und der Stromversorgungssteuervorrichtung auf der Basis des Betriebs der drehenden Betriebsvorrichtung (19a) und der Antriebslast, die von der Antriebslast-Erfassungsvorrichtung (40a, b) erfasst wird;
die Steuervorrichtung (52) in Übereinstimmung mit dem Betrieb der drehenden Betriebsvorrichtung eine Steuerung ausführt, durch die Hydraulikfluid von der Hydraulikpumpe (32) zu dem umlaufenden Hydraulikmotor (31) von dem Hydraulikfluid-Liefersteuerventil (36) derart geliefert wird, dass die drehende Plattform (6) drehbar von dem umlaufenden Hydraulikmotor (31) angetrieben wird, und Strom zum Antreiben zu dem umlaufenden Elektromotor (51) durch die StromlieferSteuervorrichtung (52) derart geliefert wird, dass die drehende Plattform drehbar von dem umlaufenden Elektromotor (51) angetrieben wird; und
die Steuervorrichtung (52) eine Steuerung ausführt, durch die, wenn die Antriebslast des umlaufenden Hydraulikmotors (31), die von der Antriebslast-Erfassungsvorrichtung (40a, b) erfasst wird, eine vorbestimmte hohe Last ist, die drehende Plattform (6) drehbar von dem umlaufenden Hydraulikmotor (31) und dem umlaufenden Elektromotor (51) angetrieben wird, und, wenn die Antriebslast des umlaufenden Hydraulikmotors (31) eine vorbestimmte niedrige Last ist, das Antreiben durch den umlaufenden Hydraulikmotor gestoppt wird und die drehende Plattform (6) drehbar von dem umlaufenden Elektromotor (51) angetrieben wird.

2. Drehantriebssteuervorrichtung nach Anspruch 1, **dadurch gekennzeichnet, dass**, wenn die Antriebslast des umlaufenden Hydraulikmotors (31) eine vorbestimmte niedrige Last ist und das Antreiben durch den umlaufenden Hydraulikmotor gestoppt wird, eine Steuerung ausgeführt wird, um einen Zustand umzusetzen, in dem der umlaufende Hydraulikmotor frei dreht.

3. Drehantriebssteuervorrichtung nach Anspruch 1 oder 2, **dadurch gekennzeichnet, dass** die Hydraulikpumpe (32) von einem Elektromotor (34) angetrieben wird, und, wenn die Antriebslast des umlaufenden Hydraulikmotors (31) die vorbestimmte niedrige Last ist und das Antreiben durch den umlaufenden Hydraulikmotor gestoppt wird, eine Steuerung zum Stoppen des Antreibens des Elektromotors (34) und Stoppen des Antreibens der Hydraulikpumpe (32) ausgeführt wird.

4. Drehantriebssteuervorrichtung nach einem der Ansprüche 1 bis 3, **dadurch gekennzeichnet, dass** die Antriebslast-Erfassungsvorrichtung (40a, b) konfiguriert ist, um den Hydraulikfluiddruck, der zu dem umlaufenden Hydraulikmotor (31) von der Hydraulikpumpe (32) geliefert wird, zu erfassen, um die Antriebslast des umlaufenden Hydraulikmotors (31) zu erfassen.

5. Drehantriebssteuervorrichtung nach einem der Ansprüche 1 bis 4, die eine Drehzahlerfassungsvorrichtung (60) zum Erfassen der Drehzahl der drehenden Plattform (6) umfasst, wobei die Steuervorrichtung (52) eine Steuerung zum drehenden Antreiben der drehenden Plattform unter Verwenden des umlaufenden Hydraulikmotors (31) und des umlaufenden Elektromotors (51) derart ausführt, dass die Drehzahl der drehenden Plattform, die von der Drehzahlerfassungsvorrichtung erfasst wird, eine Drehzahl erreicht, die dem Betrieb der drehenden Betriebsmittel entspricht.

6. Drehantriebssteuervorrichtung nach Anspruch 5, **dadurch gekennzeichnet, dass**, wenn das Antreiben durch den umlaufenden Hydraulikmotor (31) gestoppt wird, die drehende Plattform (6) drehbar von dem umlaufenden Elektromotor (51) angetrieben wird, und die Drehzahl der drehenden Plattform, die von der Drehzahlerfassungsvorrichtung (61) erfasst wird, niedriger ist als die Drehzahl, die dem Betrieb der drehenden Betriebsmittel entspricht, die drehende Plattform drehbar von dem umlaufenden Hydraulikmotor (31) zusätzlich zu dem umlaufenden Elektromotor (51) angetrieben wird.

7. Drehantriebssteuervorrichtung nach einem der Ansprüche 1 bis 6, umfassend:
eine Drehzahlerfassungsvorrichtung (61) zum Erfassen der Drehzahl der drehenden Plattform (6); und
ein Entlastungsventil (62) zum Variieren und Einstellen des Entlastungsdrucks des Hydraulikfluids, das von dem Hydraulikfluid-Liefersteuerventil (36) zu dem umlaufenden Hydraulikmotor (31) geliefert wird;
wobei die Steuervorrichtung (52), wenn die drehende Plattform (6) drehbar von dem umlaufenden Hydraulikmotor (31) angetrieben wird, eine Steuerung ausführt, um den Entlastungsdruck des Entlastungsventils (62) in Übereinstimmung mit der Drehzahl der drehenden Plattform (6), die von der Drehzahlerfassungsvorrichtung (61) erfasst wird, die niedriger ist als die Drehzahl, die dem Betrieb der drehenden Betriebsmittel entspricht, zu erhöhen.

8. Drehantriebssteuervorrichtung nach Anspruch 7, **dadurch gekennzeichnet, dass**:
ein regulierendes Hydraulikdrucklieferventil (65) bereitgestellt ist, um dem Entlastungsventil (62) mit Entlastungssteuerhydraulikdruck zum Regulieren des Entlastungsdrucks des Entlastungsventils zu liefern; und
die Steuervorrichtung (52) den Entlastungsdruck durch Steuern des Entlastungssteuerhydraulikdrucks von dem regulierenden Hydraulikdrucklieferventil (65) variiert und einstellt.

## Revendications

1. Dispositif de commande d'entraînement en rotation qui a une plate-forme rotative (6) capable d'un mouvement de rotation et qui exécute une commande pour entraîner en rotation la plate-forme rotative en combinant un moteur hydraulique de rotation entraîné hydrauliquement (31) et un moteur électrique de rotation entraîné électriquement (51), ce dispositif de commande d'entraînement en rotation comprenant :
une pompe hydraulique (32) pour alimenter un fluide hydraulique afin d'entraîner le moteur hydraulique de rotation (31) ;
une soupape de commande d'alimentation en fluide hydraulique (36) pour commander l'alimentation de fluide hydraulique de la pompe hydraulique (32) au moteur hydraulique de rotation (31) ;
une source d'alimentation électrique (56) pour alimenter de l'énergie électrique pour entraîner le moteur électrique de rotation (51) ;
un dispositif de commande d'alimentation électrique (52) pour commander l'alimentation d'énergie électrique de la source d'alimentation électrique (56) au moteur électrique de rotation (51) ;
un dispositif de commande de rotation (19a) utilisé de façon à commander la rotation de la plate-forme rotative (6) ;
**caractérisé en ce qu'**un dispositif de détection de charge d'entraînement (40a, b) pour détecter la charge d'entraînement du moteur hydraulique de rotation (31) ; et
un contrôleur (52) pour commander les actions de la soupape de commande de l'alimentation en fluide hydraulique (36) et du dispositif de commande de l'alimentation électrique en se basant sur la commande du dispositif de commande de rotation (19a) et sur la charge d'entraînement détectée par le dispositif de détection de la charge d'entraînement (40a, b) ;
le contrôleur (52), en correspondance avec la commande du dispositif de commande de rotation, exécutant une commande comme quoi un fluide hydraulique est alimenté de la pompe hydraulique (32) au moteur hydraulique de rotation (31) par la soupape de commande d'alimentation en fluide hydraulique (36) de manière à ce que la plate-forme rotative (6) soit entraînée en rotation par le moteur hydraulique de rotation (31), et une énergie électrique d'entraînement est alimentée au moteur électrique de rotation (51) par le dispositif de commande de l'alimentation électrique (52) de manière à ce que la plate-forme rotative soit entraînée en rotation par le moteur électrique de rotation (51) ; et
le contrôleur (52) exécutant une commande comme quoi, lorsque la charge d'entraînement du moteur électrique de rotation (51) détectée par le dispositif de détection de la charge d'entraînement (40a, b) est une charge élevée prédéterminée, la plate-forme rotative (6) est entraînée en rotation par le moteur hydraulique de rotation (31) et le moteur électrique de rotation (51), et, lorsque la charge d'entraînement du moteur hydraulique de rotation (31) est une charge faible prédéterminée, l'entraînement par le moteur hydraulique de rotation est arrêté et la plate-forme rotative (6) est entraînée en rotation par le moteur électrique de rotation (51).

2. Dispositif de commande d'entraînement en rotation selon la revendication 1, **caractérisé en ce que**, lorsque la charge d'entraînement du moteur hydraulique de rotation (31) est une charge faible prédéterminée et que l'entraînement par le moteur hydraulique de rotation est arrêté, une commande est exécutée pour mettre en oeuvre un état dans lequel le moteur hydraulique de rotation tourne librement.

3. Dispositif de commande d'entraînement en rotation selon la revendication 1 ou 2, **caractérisé en ce que** la pompe hydraulique (32) est entraînée par un moteur électrique (34), et, lorsque la charge d'entraînement du moteur hydraulique de rotation (31) est la charge faible prédéterminée et que l'entraînement par le moteur hydraulique de rotation est arrêté, une commande est exécutée pour arrêter l'entraînement du moteur électrique (34) et pour arrêter l'entraînement de la pompe hydraulique (32).

4. Dispositif de commande d'entraînement en rotation selon l'une quelconque des revendications 1 à 3, **caractérisé en ce que** le dispositif de détection de la charge d'entraînement (40a, b) est configuré de façon à détecter la pression du fluide hydraulique alimenté au moteur hydraulique de rotation (31) depuis la pompe hydraulique (32) afin de détecter la charge d'entraînement du moteur hydraulique de rotation (31).

5. Dispositif de commande d'entraînement en rotation selon l'une quelconque des revendications 1 à 4, comprenant un dispositif de détection de vitesse de rotation (60) pour détecter la vitesse de rotation de la plate-forme rotative (6), le contrôleur (52) exécutant une commande pour entraîner en rotation la plate-forme rotative en utilisant le moteur hydraulique de rotation (31) et le moteur électrique de rotation (51) de manière à ce que la vitesse de rotation de la plate-forme rotative détectée par le dispositif de détection de la vitesse de rotation atteigne une vitesse de rotation correspondant à la commande du moyen de commande de rotation.

6. Dispositif de commande d'entraînement en rotation selon la revendication 5, **caractérisé en ce que**, lorsque l'entraînement par le moteur hydraulique de rotation (31) est arrêté, la plate-forme rotative (6) est entraînée en rotation par le moteur électrique de rotation (51), et la vitesse de rotation de la plate-forme rotative détectée par le dispositif de détection de la vitesse de rotation (61) est plus basse que la vitesse de rotation correspondant à la commande du moyen de commande de rotation, la plate-forme rotative est entraînée en rotation par le moteur hydraulique de rotation (31) en plus du moteur électrique de rotation (51).

7. Dispositif de commande d'entraînement en rotation selon l'une quelconque des revendications 1 à 6, comprenant :
un dispositif de détection de vitesse de rotation (61) pour détecter la vitesse de rotation de la plate-forme rotative (6) ; et
une soupape de décharge (62) pour varier et régler la pression de décharge du fluide hydraulique alimenté de la soupape de commande de l'alimentation en fluide hydraulique (36) au moteur hydraulique de rotation (31);
le contrôleur (52), lorsque la plate-forme rotative (6) est entraînée en rotation par le moteur hydraulique de rotation (31), exécutant une commande pour augmenter la pression de décharge de la soupape de décharge (62) conformément à la vitesse de rotation de la plate-forme rotative (6) détectée par le dispositif de détection de la vitesse de rotation (61) étant plus basse que la vitesse de rotation correspondant à la commande du moyen de commande de la vitesse de rotation.

8. Dispositif de commande d'entraînement en rotation selon la revendication 7, **caractérisé en ce que** :
une soupape d'alimentation de pression hydraulique de régulation (65) est prévue pour alimenter à la soupape de décharge (62) une pression hydraulique de contrôle de décharge afin de réguler la pression de décharge de la soupape de décharge ; et
le contrôleur (52) varie et règle la pression de décharge en contrôlant la pression hydraulique de contrôle de décharge venant de la soupape d'alimentation de pression hydraulique de régulation (65).
